# EUROPÄISCHE PATENTSCHRIFT

(11) **EP 2 715 703 B1**
(45) Veröffentlichungstag und Bekanntmachung des Hinweises auf die Patenterteilung: **12.09.2018**
(21) Anmeldenummer: 12722736.1
(22) Anmeldetag: 21.05.2012
(51) Int. Cl.: G09B 9/14

(54) **VORRICHTUNG UND VERFAHREN ZUR SIMULATION VON BESCHLEUNIGUNGEN**
DEVICE AND METHOD FOR SIMULATING ACCELERATIONS
DISPOSITIF ET PROCÉDÉ DE SIMULATION D'ACCÉLÉRATIONS

(30) Priorität: 23.05.2011 US 201161489065 P; 23.05.2011 AT 7392011; 16.09.2011 US 201161535523 P; 16.09.2011 AT 13422011
(43) Veröffentlichungstag der Anmeldung: 09.04.2014
(73) Patentinhaber: AMST-Systemtechnik GmbH, 5282 Ranshofen (AT)
(72) Erfinder: SCHLÜSSELBERGER, Richard, A-5280 Braunau am Inn (AT); WENTINK, Mark, NL-3532 GM Utrecht (NL)
(74) Vertreter: Puchberger & Partner Patentanwälte
(86) Internationale Anmeldenummer: PCT/EP2012/059367
(87) Internationale Veröffentlichungsnummer: WO 2012/160025

(56) Entgegenhaltungen:
- US-A- 4 751 662
- US-A- 5 021 982
- US-A- 5 353 242

## Beschreibung

Die Erfindung betrifft ein Verfahren zur Simulation von Beschleunigungen für eine Person, auf die eine Hauptbeschleunigung wirkt, die im Wesentlichen durch Drehung der Person mit einem Abstand um eine Hauptachse und durch die Erdbeschleunigung erzeugt wird, wobei der Wert und die Richtung der Hauptbeschleunigung zumindest durch die Erdbeschleunigung, die Tangentialbeschleunigung und die Radialbeschleunigung bestimmt wird, wobei die Lage der Person zur Richtung der Hauptbeschleunigung im Wesentlichen durch eine Drehung der Person um zumindest zwei Nebenachsen bestimmt wird, wobei die Nebenachsen durch ein Zentrum verlaufen, das im Bereich der Person liegt, wobei bei Änderung des Wertes und der Richtung der Hauptbeschleunigung auf die Person primäre Fehlkräfte wirken die durch Drehung der Person um die Nebenachsen zumindest teilweise kompensiert werden und wobei durch Drehung der Person um die Nebenachsen sekundäre Fehlkräfte auf die Person wirken.
Ferner betrifft die Erfindung eine Vorrichtung zur Simulation von Beschleunigungen für eine Person umfassend: ein erstes Trägerelement, das eine Haltevorrichtung für zumindest eine Person aufweist und um eine erste Nebenachse drehbar gegenüber einem zweiten Trägerelement angeordnet ist; ein zweites Trägerelement, das um eine zweite Nebenachse drehbar gegenüber einem dritten Trägerelement angeordnet ist, wobei die erste Nebenachse und die zweite Nebenachse im Wesentlichen orthogonal zueinander angeordnet sind.

Die erfindungsgemäße Vorrichtung und das erfindungsgemäße Verfahren dienen unter anderem der Simulation von bewegten Systemen, wie beispielsweise Flugzeugen, Helikoptern, Fahrzeugen, Schiffen oder ähnlichem. Dabei wird einer Person, die sich in einer Kabine oder einem Hohlkörper befindet, über eine Vielzahl an künstlich erzeugten Sinneswahrnehmungen eine virtuelle Realität vorgespielt. Diese Sinnesreize sind einerseits audiovisuelle Reize, die über Bildwiedergabesysteme sowie Tonwiedergabesysteme dem Benutzer zugeführt werden, und andererseits werden über die Vorrichtung und das Verfahren Beschleunigungen bzw. Kräfte erzeugt, die auf den Benutzer wirken. Durch die Kombination aus audiovisuellen und physikalischen Sinneseindrücken interpretiert das menschliche Gehirn virtuelle Bewegungszustände. Diese Interpretation wirkt für den Benutzer umso realistischer, je exakter die Sinneswahrnehmungen den realen Sinneswahrnehmungen solcher Situationen gleichen. Aus diesem Grund ist es von großer Bedeutung, diese Signale so realitätsnah wie möglich dem Benutzer zuzuführen. Ferner umfasst die Vorrichtung und das Verfahren die Möglichkeit der Einflussnahme auf die Bewegungssimulation durch die Person. Durch diese kann die Person beispielsweise die Bewegung des simulierten Objektes in der virtuellen, simulierten Welt steuern.

Die Steuersignale der Person und etwaige Umwelteinflüsse, wie beispielsweise Wind, Fahrbahnunebenheiten, etc. werden einem physikalischen Simulationsmodell zugeführt, das einer mathematischen Abbildung des realen Verhaltens des simulierten Objekts entspricht. Es beinhaltet Größen wie Massenträgheiten, Widerstände, etc. Mit Hilfe dieses Modells werden die Beschleunigungen bzw. Kräfte und deren Richtungen berechnet, die dem Benutzer in der virtuellen Welt zugeführt werden sollen. Dies geschieht über die Steuerung unterschiedlicher Antriebe durch eine Steuerungseinheit.

Verfahren und Vorrichtungen zur Simulation von Beschleunigungen für eine Person, insbesondere Bewegungssimulatoren, Orientierungstrainer und Verfahren zu deren Betrieb sind seit längerer Zeit bekannt.

Beispielsweise sind Einarmzentrifugen bekannt, bei denen eine Person in einem gewissen Abstand zur Hauptachse entlang einer im Wesentlichen kreisförmigen Bahn gedreht wird. Dabei wirkt auf die Person zusätzlich zur Erdbeschleunigung eine Radialbeschleunigung, die im Wesentlichen von der Winkelgeschwindigkeit und dem Abstand zwischen der Person und der Hauptdrehachse bestimmt ist. Bei konstanter Winkelgeschwindigkeit entspricht die auf die Person wirkende Hauptbeschleunigung der resultierenden Beschleunigung aus der Erdbeschleunigung und der Radialbeschleunigung. Bei Änderung der Winkelgeschwindigkeit tritt zusätzlich zur Radialbeschleunigung auch eine Tangentialbeschleunigung auf. Bei ungleichförmiger Winkelgeschwindigkeit setzt sich die auf die Person wirkende Hauptbeschleunigung somit aus der Vektoraddition der Radialbeschleunigung, der Tangentialbeschleunigung und der Erdbeschleunigung zusammen.

Um der Person die Bewegung in dem simulierten Objekt realitätsnah zuzuführen, ist die Person um zumindest zwei Freiheitsgrade bewegbar und positionierbar. Die technische Lösung dieser Freiheitsgrade geschieht über eine Kabine, in welcher die Person auf einem Sitz befestigbar ist. Die Kabine ist drehbar an einem Rollring angeordnet. Der Rollring ist drehbar an dem Hauptarm der Einarmzentrifuge angeordnet. Die beiden Drehachsen, die auch als Nebenachsen bezeichnet werden, stehen orthogonal zueinander. Sie weisen, dem Stand der Technik entsprechend, einen Schnittpunkt auf, der im Bereich des Kopfes der Person liegt. Durch die zwei Drehfreiheitsgrade kann die Lage der Person zur Hauptbeschleunigung gewählt werden.
Um beispielsweise eine lineare Beschleunigung entlang der Körperhochachse zu simulieren, wird die Person entlang einer Kreisbahn um die Hauptdrehachse bewegt. Die Blickrichtung der Person verläuft tangential. Die Winkelgeschwindigkeit wird in weiterer Folge gesteigert, wodurch die resultierende Hauptbeschleunigung ebenfalls steigt. Die Person wird dabei über die zwei Nebenachsen derart positioniert, dass der Hauptbeschleunigungsvektor dieselbe Richtung aufweist wie die Körperhochachse der Person. Unterstützt wird der Effekt durch optische Sinneseindrücke, die der Person über Bildwiedergabeflächen zugeführt werden. Bei Steigerung der Winkelgeschwindigkeit steigt die Radialbeschleunigung wobei dadurch jedoch auch die Richtung der resultierenden Hauptbeschleunigung geändert wird. Da diese Abweichung der Richtung der Hauptbeschleunigung von der Körperhochachse durch die Person als Seitenkraft wahrgenommen werden würde, wird auch die Position der Person durch Drehung um die Nebenachsen angepasst. Auch die Beschleunigung in tangentialer Richtung durch Steigerung der Winkelgeschwindigkeit kann durch Lageänderung der Person kompensiert werden. Die Abweichungen und Änderungen der Richtung der Hauptbeschleunigung, die bei Änderung der Winkelgeschwindigkeit des Hauptarmes, also der Drehung um die Hauptachse entstehen, werden als primäre Fehlkräfte bezeichnet. Diese werden durch Drehung, Positionierung und/oder Lageäderung der Person kompensiert.

Nachteilig am Stand der Technik (siehe zum Beispiel US 5 021 982 A) ist, dass durch die Kompensation der primären Fehlkräfte weitere, sekundäre Fehlkräfte entstehen. Beispielsweise kann eine zu schnelle Rotation der Person um eine Nebenachse für die Person wahrnehmbar sein. Dieser Sinneseindruck steht jedoch im Widerspruch zu den visuell dargestellten Bildern und zu dem simulierten Bewegungsablauf. Dies führt zu Fehlinterpretationen des Gehirns und somit zu keiner realitätsnahen Simulation.
Ein weiterer Nachteil des Standes der Technik ist, dass die Person bei der Drehung um die Hauptachse neben der translatorischen Kreisbewegung um die Hauptachse auch eine Drehung um die Körperachse erfährt. Diese wird nach einer kurzen Adaptionsphase von dem menschlichen Gleichgewichtsorgan jedoch nicht mehr wahrgenommen. Wird nun das menschliche Gleichgewichtsorgan bzw. die Person zusätzlich um eine Achse gedreht, die nicht parallel zur Hauptachse verläuft, erzeugt dies eine Dralländerungen und Drallkräfte im Gleichgewichtsorgan, was zu weiteren Störungen der Sinneswahrnehmung führt. Zwar können die Sinneswahrnehmungen durch realitätsnahe visuelle Eindrücke verbessert werden. Im Falle eines Vestibulookulären Reflexes, bei dem Augenflackern auftritt, können jedoch die visuellen Reize nicht mehr oder nur sehr begrenzt wahrgenommen werden.
Aufgabe der Erfindung ist es nun, ein Verfahren und eine Vorrichtung zur Simulation von Beschleunigungen für eine Person zu schaffen, welches die Qualität der Simulation verbessert. Ferner ist es Aufgabe der Erfindung, die sekundären Fehlkräfte zu verringern. Eine weitere Aufgabe der Erfindung ist es, Fehlinterpretationen durch das menschliche Gehirn zu verhindern, insbesondere die Kombination aus Optischen und physikalischen Sinneseindrücken zu verbessern und die Nachteile des Standes der Technik zu überwinden.
Die erfindungsgemäßen Aufgaben werden dadurch gelöst, dass durch Drehung und Positionierung der Person um drei Nebenachsen die sekundären Fehlkräfte reduziert werden. Ferner werden die erfindungsgemäßen Aufgaben dadurch gelöst, dass zur Kompensation oder Verringerung von sekundären Fehlkräften das zweite Trägerelement drehbar um eine dritte Nebenachse an einer Bewegungsvorrichtung angeordnet ist.

Die Erfindung ist in den unabhängigen Ansprüchen 1 und 11 definiert. Weitere vorteilhafte Merkmale sind, dass zur Reduktion der sekundären Fehlkräfte die primären Fehlkräfte erhöht werden, dass zur Reduktion der primären Fehlkräfte und/oder der sekundären Fehlkräfte in einer Gleichgewichtsebene die primären Fehlkräfte und/oder die sekundären Fehlkräfte in einer weiteren Gleichgewichtsebene erhöht werden, dass die durch sekundäre Fehlkräfte hervorgerufenen Winkelbeschleunigungen unterhalb oder im Bereich der Reizschwelle der Person liegen, dass die durch primäre Fehlkräfte hervorgerufenen Winkelbeschleunigungen und die durch sekundäre Fehlkräfte hervorgerufenen Winkelbeschleunigungen unterhalb oder im Bereich der Reizschwelle der Person liegen, dass die primären Fehlkräfte Hauptbeschleunigungsfehikräfte und/oder Coriolisfehlkräfte und die sekundären Fehlkräfte Drallfehler und/oder Dreh-Trägheitskräfte umfassen und/oder dass zur Reduktion der Dreh-Trägheitskräfte die Winkelbeschleunigung und/oder der Gradient der Winkelbeschleunigung einer Drehung der Person um die Nebenachsen begrenzt und/oder gedämpft wird.

Erfindungsgemäß kann vorgesehen sein, dass die Person um die Hauptachse und um die Nebenachsen gedreht wird, sodass dabei die Winkelbeschleunigung jedes Bogenganges in der jeweiligen Gleichgewichtsebene unterhalb der Reizschwelle der Person liegt, dass die Reizschwelle zwischen 0,8°/s² und 5°/s², bevorzugt zwischen 1°/s² und 3°/s² beträgt, dass zur Simulation einer wechselnden Beschleunigung entlang einer Körperachse der Person, die Person mit einer konstanten ersten Winkelgeschwindigkeit um die Hauptachse gedreht wird bei welcher die Richtung der ersten Hauptbeschleunigung einen ersten Winkel zur Richtung der Erdbeschleunigung aufweist, anschließend die Person auf eine zweite Winkelgeschwindigkeit beschleunigt oder verzögert wird, bei der die Richtung der zweiten Hauptbeschleunigung einen zweiten Winkel zur Richtung der Erdbeschleunigung aufweist,und dass dabei die dritte Gleichgewichtsachse der Person in eine, von der Tangentialebene abweichenden Richtung gedreht wird oder ist.
Gemäß weiterer Verfahrensmerkmale ist vorgesehen, dass zur Simulation einer wechselnden Beschleunigung entlang einer Körperachse der Person, die Person mit einer konstanten ersten Winkelgeschwindigkeit um die Hauptachse gedreht wird bei welcher die Richtung der ersten Hauptbeschleunigung einen ersten Winkel zur Richtung der Erdbeschleunigung aufweist, anschließend die Person auf eine zweite Winkelgeschwindigkeit beschleunigt oder verzögert wird, bei der die Richtung der zweiten Hauptbeschleunigung einen zweiten Winkel zur Richtung der Erdbeschleunigung aufweist, dass dabei die dritte Gleichgewichtsachse der Person in eine, von der Tangentialebene abweichenden Richtung gedreht wird oder ist und dass die Körperachse der Person in eine Zwischenstellung zwischen der Richtung der ersten Hauptbeschleunigung und der Richtung der zweiten Hauptbeschleunigung und/oder in den Bereich der ersten Hauptbeschleunigung oder in den Bereich der zweiten Hauptbeschleunigung gedreht wird und/oder dass die dritte Gleichgewichtsachse der Person bei konstanter Winkelgeschwindigkeit im Wesentlichen in der Radialebene liegt.

Gemäß weiterer Verfahrensmerkmale ist vorgesehen, dass die dritte Gleichgewichtsachse der Person bei konstanter Winkelgeschwindigkeit im Wesentlichen in einer Ebene zwischen der Tangentialebene und der Radialebene liegt, dass die Lage der dritten Gleichgewichtsachse der Person zwischen der Tangentialebene und der Radialebene durch Drehung der Person um drei Nebenachsen gesteuert oder aktiv geregelt wird, dass die Lage der Körperachse der Person zwischen der Tangentialebene und der Radialebene durch Drehung der Person um drei Nebenachsen gesteuert oder aktiv geregelt wird und/oder dass die Drehung der Körperachsen und der Gleichgewichtsachsen durch Lageänderung der Person um die Nebenachsen verändert oder positioniert wird.

Ferner ist die Erfindung dadurch gekennzeichnet, dass die zweite Nebenachse und die dritte Nebenachse im Wesentlichen orthogonal zueinander angeordnet sind dass zumindest eine Steuerungseinheit zur Steuerung und/oder aktiven Regelung der Antriebe zur Bewegung der Trägerelemente und der Bewegungsvorrichtung vorgesehen ist, und/oder dass die Bewegung der Antriebe der Trägerelemente um die Nebenachsen durch die Steuerungseinheit gesteuert und/oder aktiv geregelt sind, und dass die Bewegung unterhalb oder im Bereich der Reizschwelle der Person liegen. Weitere vorteilhafte Merkmale sind ,dass durch die Steuerungseinheit eine Bewegung der Antriebe der Nebenachsen gesteuert ist, Wobei die Winkelbeschleunigungen der Bewegung unterhalb der Reizschwelle der Person liegen, dass die Vorrichtung zur Ausführung des erfindungsgemäßen Verfahrens eingerichtet ist und/oder dass die Bewegungsvorrichtung als Einarmzentrifuge, als Zentrifuge mit verfahrbarem Schlitten, als Zentrifuge mit verfahrbarem Heave-Schlitten, als Zweiarm-Zentrifuge mit beidseitig verfahrbarem Schlitten, als Zweiarm-Zentrifuge mit beidseitig verfahrbarem Heave-Schlitten, oder als Roboterarm mit zumindest einem rotatorischen und/oder translatorischen Freiheitsgrad ausgeführt ist.

Zur Verbesserung der Klarheit werden in weiterer Folge einige Grundbegriffe definiert;

Der Mensch verfügt über zwei Gleichgewichtsorgane, welche im Bereich des Kopfes angeordnet sind. Jedes Gleichgewichtsorgan umfasst drei Bogengänge, in welchen die Relativgeschwindigkeiten einer viskosen Flüssigkeit durch Sinneszellen detektiert werden können. Die drei Bogengänge jedes Gleichgewichtsorganes liegen im Wesentlichen in drei Gleichgewichtsebenen. Die erste Gleichgewichtsebene, die zweite Gleichgewichtsebene und die dritte Gleichgewichtsebene stehen im Wesentlichen orthogonal zueinander und sind angeordnet, sodass sie paarweise Bewegungen um die Gleichgewichtsachsen der Person detektieren können. Die erste Gleichgewichtsachse verläuft um Wesentlichen entlang der subjektiven Hochachse der Person, die zweite Gleichgewichtsachse entspricht im Wesentlichen einer Parallelen zur Verbindungsgeraden beider Ohren oder beider Augen der Person und die dritte Gleichgewichtsachse entspricht im Wesentlichen einer parallelen zur Blickrichtung bei geradeausgerichtetem unbewegtem Blick. Die drei Gleichgewichtsachsen stehen im Wesentlichen orthogonal zueinander. Die erste Gleichgewichtsachse entspricht beispielsweise der Gierachse, die zweite Gleichgewichtsachse der Nickachse und die dritte der Rollachse. Die drei Achsen schneiden einander im Bereich des Kopfes der Person, bevorzugt in der Symmetrieebene des Körpers, im Bereich zwischen den Ohren oder im Bereich des Herzens der Person.

Ferner sind im menschlichen Gleichgewichtsorgan Beschleunigungssensoren zur Detektion linearer Beschleunigungen vorgesehen. Einer dieser Beschleunigungssensoren detektiert vertikale, die beiden anderen detektieren horizontale Beschleunigungen.

Das menschliche Gleichgewichtsorgan nimmt Änderungen von Beschleunigungen, sowie Lageänderungen und die Lage des Körpers mit äußerster Genauigkeit wahr. Dennoch gibt es gewisse Reizschwellen, unter denen Beschleunigungen sowie Lageänderungen nicht wahrgenommen werden. Diese Reizschwellen hängen einerseits von personenbezogenen Sensibilitäten ab, andererseits können sie durch Umwelteinflüsse, wie beispielsweise visuelle Reize beeinflusst werden. Wird die Person beispielsweise starkem Stress und klaren visuellen Reizen, wie beispielsweise der Darstellung eines Horizonts ausgesetzt, so liegt die Reizschwelle weitaus höher als in einem ruhigen Umfeld ohne visuelle Reize.

Ferner ist die Reizschwelle nicht für alle Bewegungs- oder Beschleunigungsabläufe gleich hoch. So werden beispielsweise Fehlstellungen einer Person in der zweiten Gleichgewichtsebene weniger stark wahrgenommen, als Fehlstellungen der Person in der dritten Gleichgewichtsebene.

Auch der Zeitfaktor spielt eine Rolle bei der Bestimmung der Reizschwelle. So adaptiert sich das Gleichgewichtsorgan an eine konstante moderate Grundbeschleunigung, die von der Erdbeschleunigung abweicht und wird nach etwa zwanzigsekündiger bis einminütiger Adaptionsphase als nicht oder nur leicht erhöht wahrgenommen.

Beispielsweise liegt die Reizschwelle für eine durchschnittliche Person bei etwa einem Grad pro Sekunden zum Quadrat, also 1°/s². Für resistentere Personen, oder durch Beeinflussung der subjektiven Wahrnehmung kann die Reizschwelle bis zu 2°/s² oder 3°/s² betragen. In Extremfällen kann die Reizschwelle sogar 5°/s² betragen, das heißt, dass die Person erst bei einer Winkelbeschleunigung von 5°/s² die Bewegung als solche wahrnimmt. Die Reizschwelle der Winkelbeschleunigung pro Bogengang kann demnach unter 1°/s² bis zu 5°/s² betragen. Insbesondere gelten diese Werte für Winkelbeschleunigungen der Gleichgewichtsorgane, für Winkelbeschleunigungen um einen Normalvektor einer Gleichgewichtsebene, der im Bereich des Gleichgewichtsorgans liegt, für Winkelbeschleunigungen der Bogengänge durch DrallFehler und/oder für Winkelbeschleunigungen durch Drehungen der Person um das Zentrum, das im Bereich des Kopfes der Person liegt. Fehlkräfte, die unterhalb der Reizschwelle der Person liegen sind demnach Fehlkräfte, die auf das Geleichgewichtsorgan eine Drehbeschleunigung ausüben, die unterhalb der Reizschwelle der Person liegt.

Die Positionierung der Person erfolgt über Nebenachsen. Erfindungsgemäß sind zumindest zwei, bevorzugt drei, Nebenachsen vorgesehen. Die Nebenachsen entsprechen im Wesentlichen den Achsen um die die Haltevorrichtung für die Person drehbar angeordnet ist. Sie Verlaufen durch ein Zentrum, das entfernt von der Hauptachse im Bereich der Person angeordnet ist.

Die Haltevorrichtung, an der die Person befestigt ist, ist starr mit einem ersten Trägerelement verbunden. Das erste Trägerelement ist drehbar um eine erste Nebenachse an einem zweiten Trägerelement angeordnet. Das zweite Trägerelement ist wiederum drehbar um eine zweite Nebenachse an einem dritten Trägerelement angeordnet, wobei die erste und die zweite Nebenachse im Wesentlichen orthogonal zueinander stehen. Das dritte Trägerelement ist drehbar um eine dritte Nebenachse an der Bewegungsvorrichtung vorgesehen. Die zweite Nebenachse und die dritte Nebenachse stehen ebenfalls im Wesentlichen orthogonal zueinander. Als Bewegungsvorrichtung ist eine Vorrichtung bezeichnet, die zur Erzeugung der Hauptbeschleunigung also zur Bewegung der Person um die Hauptachse dient. Sie kann beispielsweise als Einarmzentrifuge, Mehrarmzentrifuge, Zweiarmzentrifuge mit verfahrbarem Schlitten etc. ausgeführt sein.

Die Drehung der Person um die Nebenachsen geschieht über Antriebe der Trägerelemente. Die Antriebe ermöglichen die Drehungen um die Nebenachsen und sind von einer Steuerungseinheit gesteuert und/oder aktiv geregelt. Auch die Drehung der Bewegungsvorrichtung um die Hauptachse durch den Hauptantrieb kann durch die Steuerungseinheit gesteuert und/oder aktiv geregelt sein.

Die Bewegungen um die Nebenachsen und die Hauptachse sind in bevorzugt von Antrieben angetrieben, gesteuert und/oder aktiv geregelt. Die Hauptbeschleunigung weist einen Wert und eine Richtung auf, wobei als Wert die Größe der Beschleunigung bezeichnet wird.

Die Drehachsen ermöglichen eine Drehung der Person und zumindest zwei, bevorzugt drei Drehachsen und weist somit zwei oder drei Drehfreiheitsgrade auf. Diese Achsen können mit den Gleichgewichtsachsen der Person übereinstimmen. In manchen Fällen kann jedoch auch gewünscht sein, dass diese Achsen nicht mit den Gleichgewichtsachsen der Person übereinstimmen.

Die Bezeichnung Fehlkraft der primären und der sekundären Fehlkräfte bezieht sich nicht nur auf Kräfte sondern auch auf Drallträgheiten, Beschleunigungen, Drehbeschleunigungen, Linearbeschleunigungen, Winkelbeschleunigungen etc.. Grundsätzlich sie diese Fehlwahrnehmungen Fehlkräfte, die auf die Sinneszellen des menschlichen Gleichgewichtsorgans wirken und werden somit zur Verbesserung der Klarheit als Fehlkräfte bezeichnet.

Als Radialebene ist eine Ebene im Bereich der Person definiert, in der die Hauptachse liegt. Als Tangentialebene ist eine Ebene im Bereich der Person definiert, in der die Tangente der Kreisbahn der Person um die Hauptdrehachse und eine zur Hauptachse parallele Gerade liegen. Die Tangentialebene und die Radialebene stehen somit etwa orthogonal zueinander und weisen eine Schnittgerade auf, die parallel zur Hauptachse und im Bereich der Person verläuft.
Als Körperachse der Person wird eine beliebige Gerade bezeichnet die durch den Körper der Person verläuft und relativ zur der Person ortsfest angeordnet ist. Die Gleichgewichtsachsen der Person sind beispielsweise Körperachsen.

Die Lage der Person und die Lage der Person zur Richtung der Hauptbeschleunigung werden bezüglich eines mitdrehenden Koordinatensystems definiert.

In weiterer Folge werden nun das erfindungsgemäße Verfahren sowie die erfindungsgemäße Vorrichtung anhand der Figuren weiter beschrieben.
Fig. 1 zeigt eine schematische Ansicht der Kinematik.
Fig. 2 zeigt dieselbe kinematische Anordnung wie Fig. 1, jedoch in einer Seitenansicht.
Fig. 3 zeigt eine erfindungsgemäße Vorrichtung.
Fig. 4 zeigt eine weitere Ausführungsform einer erfindungsgemäßen Vorrichtung.
Fig. 5 zeigt eine schematische Aufsicht zur Beschreibung der kinematischen Verhältnisse bei wechselnden Winkelgeschwindigkeiten.
Fig. 6 zeigt dieselbe kinematische Anordnung wie Fig.5, jedoch in einer Seitenansicht.

Zur Vereinfachung der Darstellung entsprechen die dargestellten Vektoren der Beschleunigungen den Beschleunigungskräften die auf die Person wirken. Die Orientierung der Beschleunigungskraft ist der entsprechenden Beschleunigung entgegengesetzt. Die Beschleunigungsvektoren entsprechen somit den von den Beschleunigungen bewirkten entgegengesetzten Beschleunigungskräften.

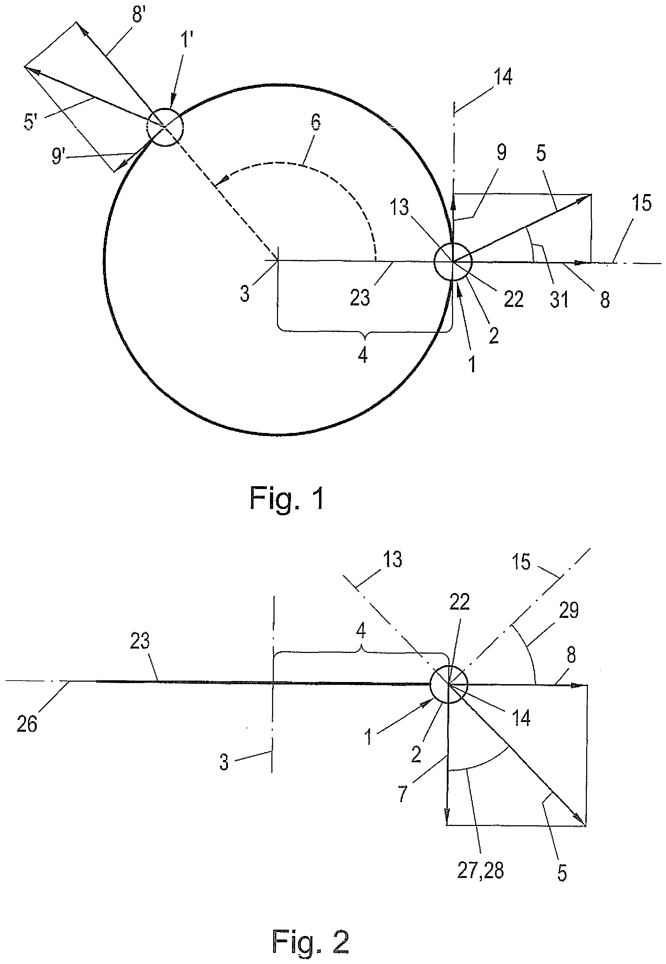

Fig. 1 zeigt eine schematische Ansicht der Kinematik zur Erörterung des erfindungsgemäßen Verfahrens und der erfindungsgemäßen Vorrichtung. Dabei entspricht die Darstellungsebene der Horizontalebene und die Richtung der Schwerkraft verläuft projizierend. Die Person 1 wird mit einem Abstand 4 um eine Hauptachse 3 gedreht. Dabei wird vorerst davon ausgegangen, dass die Person 1, insbesondere der Kopf 2 der Person starr mit der Bewegungsvorrichtung 23 verbunden ist. Das bedeutet, dass die Person 1 bei einer Umdrehung um die Hauptachse 3 auch eine Umdrehung um eine Körperachse der Person erfährt, die parallel zur Hauptachse 3 verläuft. Bei einer Drehung der Person um die Hauptachse 3 um einen Winkel 6 erfährt die Person eine Drehung um eine, zur Hauptachse 3 parallelen Körperachse um denselben Winkel in dieselbe Richtung. Durch die Drehung der Person 1 mit einem Abstand 4 zur Hauptachse 3 wirkt auf die Person 1 zumindest eine Radialbeschleunigung 8. Bei ungleichförmiger Winkelgeschwindigkeit um die Hauptachse 3 kommt ferner noch eine Tangentialbeschleunigung 9 hinzu. Die Richtung der Tangentialbeschleunigung verläuft tangential zur Bewegungskurve der Person. Die Orientierung der Tangentialbeschleunigung ist davon abhängig, ob die Änderung der Winkelgeschwindigkeit einer Beschleunigung oder einer Verzögerung entspricht.

Die auf die Person in der Hauptdrehebene 26 wirkende Hauptbeschleunigung 5 entspricht der Vektoraddition der Radialbeschleunigung und der Tangentialbeschleunigung. Abhängig von der Lage der Person sind eine erste Gleichgewichtsebene 10, eine zweite Gleichgewichtsebene 11 und eine dritte Gleichgewichtsebene 12 sowie eine erste Gleichgewichtsachse 13, eine zweite Gleichgewichtsachse 14 und eine dritte Gleichgewichtsachse 15 definiert.

Ferner ist eine zweite Stellung der Person 1' eingezeichnet in der die Hauptbeschleunigung 5', die Radialbeschleunigung 8' und die Tangentialbeschleunigung 9' wirken.

Fig. 2 zeigt dieselbe kinematische Anordnung wie Fig. 1, jedoch in einer Seitenansicht, sodass die Hauptdrehebene 26 projizierend verläuft und die Hauptachse 3 in der Bildebene liegt. Die Person 1 wird wiederum mit einem Abstand 4 um die Hauptachse 3 gedreht. Gemäß der erfindungsgemäßen Vorrichtung geschieht diese Drehung maßgeblich durch die Bewegungsvorrichtung 23. Auf die Person 1, insbesondere den Kopf 2 der Person wirken in der Darstellungsebene die Radialbeschleunigung 8, sowie die Erdbeschleunigung 7. Die Radialbeschleunigung ist dabei von dem Abstand 4 und der Winkelgeschwindigkeit der Drehung der Person 1 um die Hauptachse abhängig. Die Erdbeschleunigung kann bei ruhenden Systemen als konstant angenommen werden. Die resultierende Hauptbeschleunigung 5 in der betrachteten Radialebene entsteht durch Vektoraddition der Radialbeschleunigung 8 und der Erdbeschleunigung 7. Bei Veränderung der Winkelgeschwindigkeit oder dem Abstand 4 ändert sich somit die Radialbeschleunigung 8. Da die Erdbeschleunigung 7 als konstant angenommen wird, ändern sich bei Änderung der Radialbeschleunigung der Wert und die Richtung der Hauptbeschleunigung 5. Insgesamt ist die Hauptbeschleunigung 5 somit zumindest von der Radialbeschleunigung 8, der Tangentialbeschleunigung 9 und der Erdbeschleunigung 7 abhängig. In der vorliegenden Darstellung ist die Lage der Person 1 derart gewählt, dass die erste Gleichgewichtsachse 13 mit der Richtung der Hauptbeschleunigung 5 übereinstimmt. Somit wirkt die Hauptbeschleunigung in der Gierachse und wird subjektiv als senkrechte Beschleunigung wahrgenommen, wobei die Tangentialbeschleunigung vorerst als nicht vorhanden angenommen wird.

Soll nun der Wert der Hauptbeschleunigung 5 verändert werden, jedoch die Lage der Person 1 zur ändernden Richtung der ändernden Hauptbeschleunigung 5 unverändert bleiben, so muss die Lage der Person 1 der Richtung der Hauptbeschleunigung 5 angepasst werden. Wird diese Anpassung nicht vorgenommen, so erfährt die Person 1 eine primäre Fehlkraft. Diese resultiert aus der Tatsache, dass sich bei Änderung des Wertes der Hauptbeschleunigung 5 auch die Richtung der Hauptbeschleunigung ändert. Die Anpassung der Lage der Person 1 bzw. des Kopfes 2 der Person 1 geschieht durch eine Drehung der Person um zumindest eine der Nebenachsen 19, 20, 21.

Durch eine Drehung der Person beispielsweise um die zweite Gleichgewichtsachse 14 ändert sich die Lage der Bogengänge der Person 1 zur Hauptdrehebene 26. Wie angemerkt, drehen sich die Person und somit auch die Gleichgewichtsorgane der Person bei einer Umdrehung um die Hauptachse 3 auch einmal um eine Körperachse der Person, die parallel zur Hauptachse verläuft. Nach einer kurzen Adaptionsphase wird diese Drehung um die Körperachse jedoch von der Person 1 nicht mehr wahrgenommen, da sich die Geschwindigkeit der Flüssigkeit durch Reibungs- und Viskositätseffekte der Bewegung der Bogengänge anpasst. Somit ruht die Flüssigkeit relativ zu den Bogengängen, wodurch keine Rotation wahrgenommen werden kann. Wird nun die Lage der Gleichgewichtsebenen 10, 11, 12 relativ zur Hauptachse 3 oder relativ zur Hauptdrehebene 26 verändert, so hat dies zu Folge, dass unterschiedliche Bogengänge zur Hauptdrehebene 26 oder von der Hauptdrehebene weg gekippt werden. Durch die Kippung kommt es zu einer drallbedingten Winkelbeschleunigung und zu einer Relativbewegung der Flüssigkeit in den Bogengängen, was von der Person fälschlicherweise als Bewegung wahrgenommen wird. Dieser Effekt bewirkt eine sekundäre Fehlkraft und wird als Drallfehler bezeichnet. Obwohl die Person möglicherweise nur kleine Bewegungen um die dritte Gleichgewichtsachse, also die Rollachse ausführt, kann dies von den Gleichgewichtsorganen als Drehung um zumindest eine der beiden restlichen Gleichgewichtsachsen interpretiert werden. Dieser Sinnesreiz, also der Drallfehler, kann unter Umständen einen vestibulookulären Reflex auslösen. Selbst wenn die zu simulierende Umgebung durch klare visuelle Darstellungen unterstützt ist, die den Sinneseindruck für die Person 1 klarstellen sollten, ist dieser die Wahrnehmung des visuellen Sinneseindrucks nach Einsetzen eines Augenflackerreflexes nicht mehr möglich. Eine unerwünschte Desorientierung der Person ist die Folge. Je nach Reizschwelle der Person werden sekundäre Fehlkräfte und/oder Drallfehler bei unterschiedlichen Werten wahrgenommen. Bleibt der Wert der sekundären Fehlkäfte oder des Drallfehlers unter der Reizschwelle der Person, werden die Fehlkräfte nicht wahrgenommen, übersteigt der Wert die Reizschwelle so wird er wahrgenommen und kann einen vestibulookulären Reflex auslösen.

Fig. 2 zeigt weiters den ersten Winkel 27 zwischen der Richtung der Hauptbeschleunigung 5 und der Richtung der Erdbeschleunigung 7. Die eingezeichneten Beschleunigungsverhältnisse entsprechen etwa einer Radialbeschleunigung, die im Wesentlichen gleich groß ist, wie die Erdbeschleunigung. Die Richtung der Hauptbeschleunigung 5, insbesondere der erste Winkel 27 ist somit etwa 45°. Der Wert der Hauptbeschleunigung entspricht bei einer Erdbeschleunigung von einem G und einer Radialbeschleunigung von einem G etwa der 1,41-fachen Erdbeschleunigung, also 1,41 G. Wird nun die Winkelgeschwindigkeit der Person 1 um die Hauptachse 3 erhöht, so steigt die Radialbeschleunigung 8. Dabei steigt sich auch der Winkel der Richtung der Hauptbeschleunigung zur Richtung der Erdbeschleunigung 7. Bei Verringerung der Winkelgeschwindigkeit verringert sich die Radialbeschleunigung. In diesem Fall verringert sich der Winkel.

In Fig. 1 ist insbesondere eine Situation dargestellt, in der die Person 1 von einer ersten Winkelgeschwindigkeit auf eine zweite Winkelgeschwindigkeit verzögert wird. Dabei treten neben der Erdbeschleunigung, die in der Darstellung der Fig. 1 projizierend verläuft, einer Radialbeschleunigung 8 auch eine Tangentialbeschleunigung 9 auf. Die resultierende Hauptbeschleunigung 5 weist einen Tangentialwinkel 31 auf. Der Wert des Tangentialwinkels 31 ist bei konstanter Winkelgeschwindigkeit im Wesentlichen null.

Die in Fig. 1 dargestellte Winkelverzögerung hat Einfluss auf die Richtung der Hauptbeschleunigung 5, die auf die Person 1 wirkt. Beispielsweise kann die Person mit Blickrichtung nach außen positioniert werden, d.h., dass die dritte Gleichgewichtsachse der Person oder die Blickrichtung der Person in eine Richtung weist, die weg von der Hauptachse 3 gerichtet ist, jedoch nicht notwendigerweise radial nach außen verläuft. Soll nun der Wert, der auf die Person wirkenden Hauptbeschleunigung 5 verändert werden, ohne dabei die Richtung, in der die Hauptbeschleunigung auf die Person wirkt zu ändern, kann die Person beispielsweise um jene Körperachse gedreht werden, die parallel zur Hauptachse 3 verläuft. In der dargestellten Anordnung der Fig. 1 wäre eine radial nach außen blickende Person bei der dargestellten Tangentialbeschleunigung 9 um den Tangentialwinkel 31 zu drehen, um die Tangentialbeschleunigung 9 zu kompensieren.

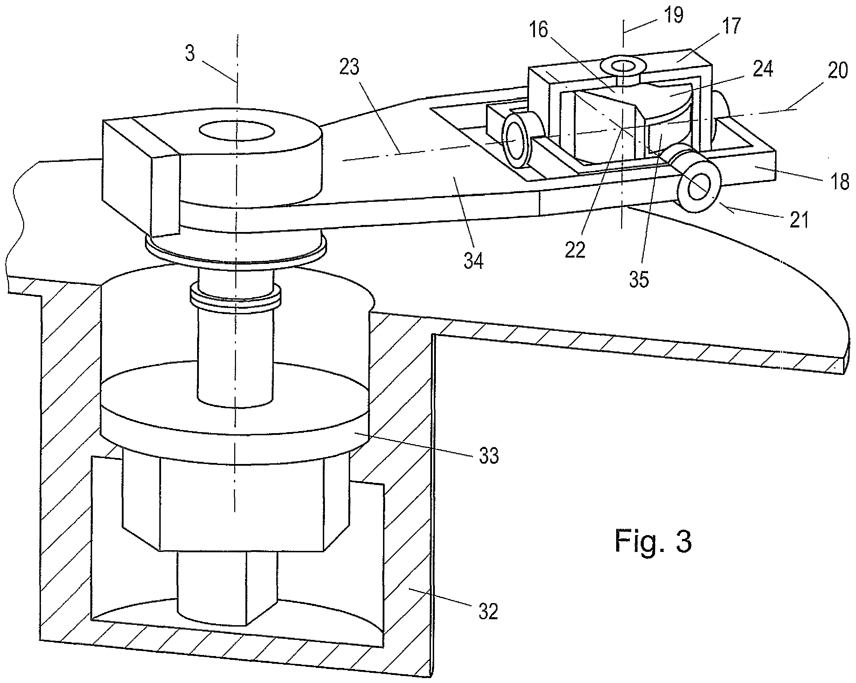

Fig. 3 zeigt eine erfindungsgemäße Vorrichtung, wobei die Bewegungsvorrichtung 23 als Einarmzentrifuge ausgeführt ist. Diese weist einen Hauptarm 34 auf, der über einen, in einem Fundament 32 gelagerten Hauptantrieb 33 angetrieben ist. Der Hauptarm 34 kann dabei um die Hauptachse 3 gedreht werden. Entfernt von der Hauptachse 3 ist am Hauptarm ein drittes Trägerelement 18 drehbar um eine dritte Nebenachse 21 angeordnet. An dem dritten Trägerelement ist ein zweites Trägerelement 17 drehbar um eine zweite Nebenachse 20 angeordnet. Die zweite und die dritte Nebenachse stehen im Wesentlichen orthogonal zueinander und treffen einander im Zentrum 22. Das erste Trägerelement 16 ist drehbar um eine erste Nebenachse 19 am zweiten Trägerelement angeordnet. Die erste und die zweite Nebenachse stehen ebenfalls im Wesentlichen orthogonal zueinander und treffen einander im Zentrum 22. Das erste Trägerelement 16 ist in der folgenden Ausführungsform als Teil der Kabine 24 ausgeführt. In der Kabine 24 ist die Haltevorrichtung für die Person 1 vorgesehen. Die Haltevorrichtung ist in bevorzugter Weise als Sitz ausgeführt. Ferner weist die Kabine in ihrem Inneren eine Bildwiedergabefläche 35 auf, die schematisch als rechteckig gebogene Fläche dargestellt ist. Es handelt sich dabei um eine schematische Darstellung. Die Bildwiedergabefläche ist an der Innenseite der Kabine vorgesehen und somit in der Regel von außen nicht zu sehen. Die Person, die in der folgenden Ausführungsform im Wesentlichen starr mit der Kabine 24 verbunden ist, ist über die erste Nebenachse 19, die zweite Nebenachse 20 und die dritte Nebenachse 21 um drei Drehfreiheitsgrade rotatorisch bewegbar. Durch das Vorsehen eines dritten Freiheitsgrades können sekundäre Fehlkräfte zumindest teilweise kompensiert und/oder verringert werden. Der dritte Freiheitsgrad entspricht beispielsweise der Drehung um eine Körperachse, die parallel zur Hauptachse 3 verläuft oder einer Drehung um die erste Gleichgewichtsachse der Person entspricht.

Die Drehung der Person um die Nebenachsen 19, 20, 21 geschieht über Antriebe der Trägerelemente 16, 17, 18. Die Antriebe ermöglichen die Drehungen um die Nebenachsen und sind von einer Steuerungseinheit gesteuert und/oder aktiv geregelt. Auch die Drehung der Bewegungsvorrichtung um die Hauptachse 3 durch den Hauptantrieb 33 kann durch die Steuerungseinheit gesteuert und/oder aktiv geregelt sein. Ferner kann die Person über Parametereingabemittel die Steuerung beeinflussen, insbesondere das simulierte Objekt in der virtuellen Welt steuern.

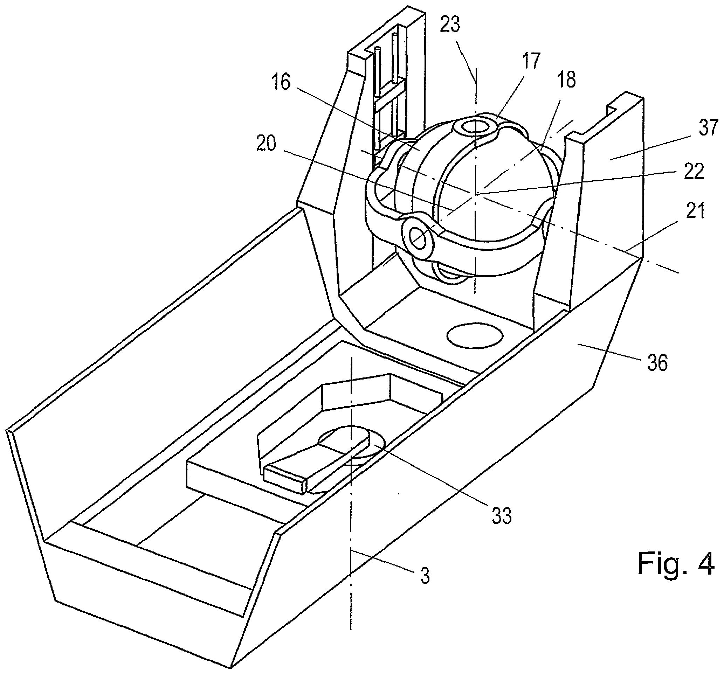

Fig. 4 zeigt eine weitere Ausführungsform einer erfindungsgemäßen Bewegungsvorrichtung. Dabei ist ein Schlittenkorb 36 drehbar um eine Hauptachse 3 gelagert der von einem Hauptantrieb 33 angetrieben werden kann. Längs verfahrbar in dem Schlittenkorb 36 ist ein Heaveschlitten 37 vorgesehen. An dem Heaveschlitten 37 ist wiederum ein drittes Trägerelement 18 vorgesehen, das um eine dritte Nebenachse 21 drehbar ist. Am dritten Trägerelement 18 ist drehbar um eine zweite Nebenachse 20 ein zweites Trägerelement 17 vorgesehen. Am zweiten Trägerelement 17 ist drehbar um eine erste Nebenachse ein erstes Trägerelement 16 vorgesehen. Mit diesem ersten Trägerelement ist die Person 1 über eine Befestigungsvorrichtung verbunden. Zusätzlich zu den drei Nebenachsen ist die Person entlang einer, zur Hauptachse 3 parallel verlaufenden Heaveachse translatorisch bewegbar. Durch die verschiebbare Anordnung des Heaveschlittens 37 am Schlittenkorb 36 kann der Abstand 4 von der Person, und vom Zentrum 22 zur Hauptachse 3 verändert werden. Dadurch ist eine Änderung der Radialbeschleunigung zusätzlich zur Änderung durch die Winkelgeschwindigkeit auch durch eine Änderung des Abstandes der Person zur Hauptachse 3 möglich. Wiederum weist die Haltevorrichtung für die Person 1 drei Drehfreiheitsgrade auf. Zusätzlich zu den drei Drehfreiheitsgraden kann die Person entlang einer, zur Hauptachse 3 parallelen Richtung, und entlang des Schlittenkorbes 36 translatorisch bewegt werden. Zusammen mit der Drehung um die Hauptachse 3 bietet die kinematische Anordnung nach Fig. 4 somit sechs Freiheitsgrade.

Zur Kompensation und/oder Verringerung der sekundären Fehlkräfte bei Simulationen können unterschiedliche Bewegungsabläufe vorgesehen sein.

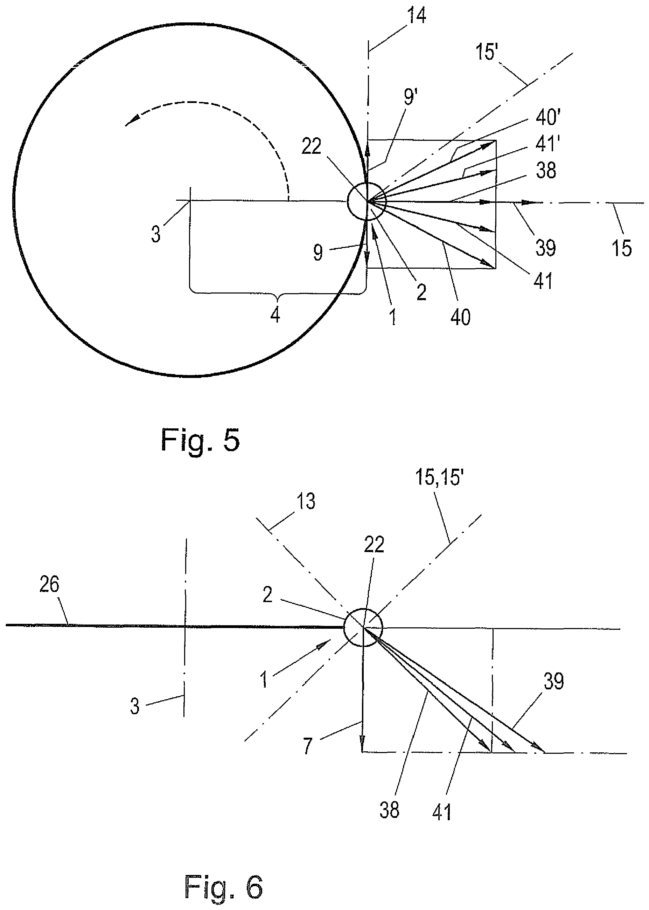

Fig. 5 zeigt eine schematische Aufsicht zur Beschreibung der kinematischen Verhältnisse bei wechselnden Winkelgeschwindigkeiten. Die Person 1 wird mit einem Abstand 4 um die Hauptachse 3 gedreht wobei zur Erzeugung unterschiedlicher Hauptbeschleunigungen die Winkelgeschwindigkeit variiert wird. Beispielsweise kann zur Simulation einer Geschwindigkeitsänderung oder eines Kurvenflugs von Flugzeugen die Person mit einer anfänglichen ersten Hauptbeschleunigung 38 und anschließend mit einer zweiten Hauptbeschleunigung 39 belastet werden. Zu diesem Zweck wird die Winkelgeschwindigkeit von einer ersten Winkelgeschwindigkeit auf eine zweite Winkelgeschwindigkeit erhöht. Zu Anfang der Simulation dreht die Bewegungsvorrichtung 23 die Person 1 mit einer konstanten ersten Winkelgeschwindigkeit. Die resultierende erste Hauptbeschleunigung 38 wirkt in einer Radialebene auf die Person. Wird nun die Winkelgeschwindigkeit erhöht, so wirkt auf die Person neben der Radialbeschleunigung auch eine Tangentialbeschleunigung 9. Diese resultiert in einer Änderung der Richtung der Hauptbeschleunigung und verläuft in der schematischen Darstellung, beispielsweise entlang des Beschleunigungsvektors 40. Ist nun die zweite Winkelgeschwindigkeit erreicht, dreht sich die Person mit der zweiten Winkelgeschwindigkeit gleichförmig um die Hauptachse 3. Die Tangentialbeschleunigung ist dabei wieder gleich null und auf die Person wirkt die zweite Hauptbeschleunigung 39, die im Falle von einer Vergrößerung der Winkelgeschwindigkeit größer ist, als der Wert der ersten Hauptbeschleunigung 38.

Bei einer Verringerung der Winkelgeschwindigkeit wirkt die Tangentialbeschleunigung 9' sowie der resultierende Beschleunigungsvektor 40'.

Fig. 6 zeigt dieselbe kinematische Anordnung einer Person 1, die um eine Hauptdrehachse 3 gedreht wird. Wiederum wird die Person von einer ersten Winkelgeschwindigkeit auf eine zweite Winkelgeschwindigkeit beschleunigt. Dabei wirkt bei gleichförmiger Bewegung der Person mit der ersten Winkelgeschwindigkeit die erste Hauptbeschleunigung 38. Bewegt sich die Person mit der zweiten Winkelgeschwindigkeit um die Hauptachse 3, wobei die zweite Winkelgeschwindigkeit größer ist als die erste Winkelgeschwindigkeit, so wirkt die zweite Hauptbeschleunigung 39 auf die Person. Der Wert der zweiten Hauptbeschleunigung 39 ist größer als der Wert der ersten Hauptbeschleunigung 38. Zur Kompensation der Änderung der Richtung der Hauptbeschleunigung bei Änderung des Wertes kann die Lage der Person 1 verändert werden. Zur Veränderung der Lage der Person ist eine Bewegung um die Nebenachsen 19, 20, 21 vorgesehen.

In einem Beispiel für ein Verfahren zur Simulation von Beschleunigungen ist eine Person von einer ersten Hauptbeschleunigung auf eine zweite Hauptbeschleunigung zu bringen. Die Hauptbeschleunigung soll in dem ersten Beispiel entlang der Körperhochachse der Person oder entlang der ersten Gleichgewichtsachse 13 der Person wirken. Die Person wird nun in einem ersten Schritt konstant mit der ersten Winkelgeschwindigkeit um die Hauptachse 3 gedreht. Auf die Person wirkt die erste Hauptbeschleunigung 38. Um nun die Richtung der Beschleunigung mit der ersten Gleichgewichtsachse 13 übereinzustimmen wird die Lage der Person durch Drehung um die Nebenachsen verändert. Beispielsweise wird die Lage der Person derart ausgerichtet, dass die erste Gleichgewichtsachse 13 mit dem Vektor der ersten Hauptbeschleunigung 38, mit dem Vektor der zweiten Hauptbeschleunigung 39 oder einer Zwischenstellung 41 zwischen den Vektoren übereinstimmt. Die dritte Gleichgewichtsachse 15 der Person 1 weist dabei im Wesentlichen nach außen. Sie folgt demnach bei konstanter Winkelgeschwindigkeit im Wesentlichen der Radialebene der Hauptbeschleunigung. Bei Beschleunigung der Person von der ersten Winkelgeschwindigkeit auf die zweite Winkelgeschwindigkeit wird nun, um die Lage der Person anzupassen, die Person um die zweite Gleichgewichtsachse 14 nach hinten geneigt. Diese Neigung erfolgt jedoch in einer Weise, sodass die Bewegung insbesondere die aus der Bewegung resultierenden sekundären Fehlkräfte im Bereich oder unterhalb der Reizschwelle der Person liegen. Auch die Kompensation der primären Fehlkräfte erfolgt in einem Ausmaß, sodass die Fehlkräfte im Bereich oder unterhalb der Reizschwelle der Person liegen. Dies kann beispielsweise dadurch erzielt werden, dass die Person bei der Beschleunigung von einer ersten Winkelgeschwindigkeit auf eine zweite Winkelgeschwindigkeit nicht um die zweite Gleichgewichtsachse bewegt wird. Die erste Gleichgewichtsachse 13 wird dabei entlang einer Zwischenstellung 41 verlaufend angeordnet. Bei Rotation der Person mit einer ersten Winkelgeschwindigkeit fühlt die Person eine leichte Neigung nach hinten. Bei der zweiten Winkelgeschwindigkeit eine leichte Neigung nach vorne. Dieses Gefühl ist jedoch im Vergleich zu den anderen wirkenden Kräften so gering, dass es im Bereich oder unterhalb der Reizschwelle der Person liegt. Dadurch wird der Effekt kompensiert, dass durch eine Neigung der Person um eine Achse, die nicht parallel mit der Hauptachse 3 ist, der Drall der Hauptdrehung auf unterschiedliche Bogengänge übertragen wird. Bei fester Positionierung der ersten Gleichgewichtsachse 13 um die zweite Gleichgewichtsachse 14 wird somit der Drallfehler vollständig kompensiert. Die dadurch entstehenden Sekundärfehler sind vernachlässigbar und/oder liegen unterhalb oder im Bereich der Reizschwelle.

Eine weitere Möglichkeit zur Positionierung der Person bei steigender Beschleunigung und steigender Winkelgeschwindigkeit ist die Ausrichtung der dritten Gleichgewichtsachse entlang der Achse 15'. Die Komponente der Blickrichtung der Person in der Hauptdrehebene ist dabei in einem gewissen Winkel zwischen der tangentialen und der radialen Richtung entlang der Achse 15' nach außen gerichtet. Der Winkel kann beispielsweise zwischen 30° und 60° oder 45° oder von der radialen Richtung, Richtung tangentialer Richtung gedreht sein. Zur Simulation einer Beschleunigung entlang der ersten Gleichgewichtsachse 13 wird diese mit der Hauptbeschleunigung 5 in Übereinstimmung gebracht. Die Lageänderung geschieht wiederum über eine Drehung der Person um die Nebenachsen 19, 20, 21. Bei Erhöhung der Winkelgeschwindigkeit von einer ersten Winkelgeschwindigkeit auf eine zweite Winkelgeschwindigkeit wird die Lage der Person zur Kompensation der primären Fehlkräfte angepasst. Dazu wird die erste Gleichgewichtsachse der ändernden Hauptbeschleunigung 38, 39 angepasst. Durch die Schrägstellung der Person um einen Winkel entlang der Achse 15' wird der Drallfehler auf mehrere, zumindest zwei, bevorzugt drei Gleichgewichtsebenen oder Bogengänge aufgeteilt. Dies bewirkt in weiterer Folge, dass die Bewegung der Person um eine Achse, die nicht parallel zur Hauptachse 3 verläuft, im Bereich oder unterhalb der Reizschwelle der Person liegt. So ist bei einer Ausführung des erfindungsgemäßen Verfahrens vorgesehen, dass die Reizschwelle in allen Gleichgewichtsebenen oder Bogengängen der Person unterschritten wird. Dazu können primäre Fehlkräfte und/oder sekundäre Fehlkräfte in einer Gleichgewichtsebene oder eines Bogenganges steigen um primäre Fehlkräfte und/oder sekundäre Fehlkräfte in einer anderen Gleichgewichtsebene oder eines anderen Bogenganges im Bereich oder unterhalb der Reizschwelle zu halten.

Eine weitere Möglichkeit zur Positionierung der Person ist, dass die Person mit Blickrichtung nach innen gedreht ist.

Wiederum soll die Hauptbeschleunigung 5 entlang einer Körperachse beispielsweise entlang der ersten Gleichgewichtsachse 13 der Person 1 wirken. Bei einer ersten Winkelgeschwindigkeit ist die dritte Gleichgewichtsachse 15 der Person im Wesentlichen nach innen gerichtet und nach unten geneigt. Die erste Gleichgewichtsachse 13 steht im Wesentlichen orthogonal zur dritten Gleichgewichtsachse 15, ist somit nach außen geneigt und verläuft entlang der Richtung der Hauptbeschleunigung. Für die Person entsteht dadurch die subjektive Empfindung einer Beschleunigung in Richtung der Körperhochachse. Wird nun die Person von der ersten Winkelgeschwindigkeit auf eine zweite Winkelgeschwindigkeit beschleunigt, so kann, wie in den vorangegangenen Beispielen, die Änderung der Richtung der Hauptbeschleunigung 5 durch Drehung der Person um die Nebenachsen kompensiert werden. Dies jedoch in einem Ausmaß, sodass die Winkelbeschleunigungen, insbesondere die primären und sekundären Fehlkräfte im Bereich oder unterhalb der Reizschwelle der Person liegen. Zur Verringerung des Drallfehlers kann dabei die erste Gleichgewichtsachse der Person in einer Zwischenstellung zwischen dem ersten Hauptbeschleunigungsvektor 38 und dem zweiten Hauptbeschleunigungsvektor 39 positioniert werden.

Eine weitere Anwendung des erfindungsgemäßen Verfahrens ist die Verzögerung von einer ersten Winkelgeschwindigkeit auf eine zweite Winkelgeschwindigkeit, wobei die zweite Winkelgeschwindigkeit kleiner ist, als die erste Winkelgeschwindigkeit. Insbesondere bei der Verringerung der Hauptbeschleunigung 5 werden von der Person 1 die Drallfehler subjektiv stärker wahrgenommen. Die Person wird beispielsweise mit Blick nach außen positioniert, wobei wiederum die erste Gleichgewichtsachse 13 im Wesentlichen der Richtung der Hauptbeschleunigung entspricht. Zur Kompensation der primären Fehlkräfte kann nun die dritte Gleichgewichtsachse mit der Änderung der Richtung der Hauptbeschleunigung 5, insbesondere der ersten Hauptbeschleunigung 38 und der zweiten Hauptbeschleunigung 39, übereingestimmt werden. Zur weiteren erfindungsgemäßen Kompensation kann die erste Gleichgewichtsachse der Person in einer Zwischenstellung 41 zwischen der Richtung der ersten Hauptbeschleunigung 38 und der zweiten Hauptbeschleunigung 39 positioniert sein. Dabei wird keine Kompensation der Änderung der Richtung der Hauptbeschleunigung in einer Radialebene vorgenommen. Dadurch wird, wie in den vorangegangenen Beispielen beschrieben, der Drallfehler reduziert. Die Reduktion des Drallfehlers bewirkt eine Erhöhung der primären Fehlkräfte, jedoch bevorzugt unterhalb oder im Bereich der Reizschwelle der Person.

Eine weitere Ausführungsform des erfindungsgemäßen Verfahrens ist dadurch gekennzeichnet, dass die Person um eine Hauptachse 3 mit einer Winkelgeschwindigkeit gedreht wird. Die Richtung mit der die Hauptbeschleunigung auf die Person wirkt wird durch Drehung und Positionierung der Person um die Nebenachsen bestimmt. Die Person wird gemäß einer Ausführung von einer ersten Winkelgeschwindigkeit auf eine zweite Winkelgeschwindigkeit um die Hauptachse beschleunigt, wobei dadurch der Wert der Hauptbeschleunigung steigt und die Richtung der Hauptbeschleunigung geändert wird. Die zweite Winkelgeschwindigkeit ist größer als die erste Winkelgeschwindigkeit, wodurch der Wert der zweiten Hauptbeschleunigung größer ist als der Wert der ersten Hauptbeschleunigung. In weiterer Folge wird die Winkelgeschwindigkeit auf eine dritte Winkelgeschwindigkeit gesenkt, die niedriger ist als die zweite Winkelgeschwindigkeit. Dazu werden die primären und die sekundären Fehlkräfte zumindest teilweise kompensiert, sodass sie im Bereich oder unterhalb der Reizschwelle der Person liegen. Gemäß einer weiteren Ausführung des erfindungsgemäßen Verfahrens wird die Person anfänglich, während einer Steigerung der Winkelgeschwindigkeit von der ersten Winkelgeschwindigkeit auf die zweite Winkelgeschwindigkeit im Wesentlichen tangential positioniert, d.h. die dritte Gleichgewichtsachse weist im Wesentlichen in tangentiale Richtung oder verläuft in einer Tangentialebene. Ist die zweite Winkelgeschwindigkeit erreicht, so wird die Person, insbesondere die dritte Gleichgewichtsachse 15 der Person nach außen gerichtet. Diese Drehung der Person um einen gewissen Winkel, insbesondere 90°, geschieht dabei derart, dass sie nicht wahrgenommen wird und/oder im Bereich oder unterhalb der Reizschwelle der Person liegt. Diese Bewegung kann gesteuert oder aktiv geregelt sein. In weiterer Folge wird die Winkelgeschwindigkeit von der zweiten Winkelgeschwindigkeit auf die dritte Winkelgeschwindigkeit gesenkt. Während der Steigerung der Winkelgeschwindigkeit von der ersten Winkelgeschwindigkeit auf die zweite Winkelgeschwindigkeit werden die primären Fehlkräfte maßgeblich durch Rotation der Person um die dritte Gleichgewichtsachse und um die zweite Gleichgewichtsachse kompensiert. Während der Verringerung der Winkelgeschwindigkeit von der zweiten auf die dritte Winkelgeschwindigkeit werden die primären Fehlkräfte, insbesondere durch Drehung der Person um die erste Gleichgewichtsachse und um die zweite Gleichgewichtsachse kompensiert. Die primären und die sekundären Fehlkräfte werden dabei kompensiert oder verringert, sodass sie im Bereich oder unterhalb der Reizschwelle der Person liegen.

Gemäß einer weiteren Ausführungsform des erfindungsgemäßen Verfahrens wird die Person anfänglich in tangentiale Richtung ausgerichtet und zur Erhöhung der ersten Winkelgeschwindigkeit auf die zweite Winkelgeschwindigkeit von der tangentialen Ausrichtung der dritten Gleichgewichtsachse um die zweite Gleichgewichtsachse gedreht. Diese Drehung kann aktiv geregelt sein, um die Drehung der Person im Bereich oder unterhalb der Reizschwelle zu halten.

Gemäß einer weiteren Ausführungsform wird die Person, insbesondere die dritte Gleichgewichtsachse der Person, im Wesentlichen tangential ausgerichtet. Bei der Steigerung von einer ersten Winkelgeschwindigkeit auf die zweite Winkelgeschwindigkeit werden die primären und die sekundären Fehlkräfte durch Drehung der Person um die Nebenachsen zumindest teilweise kompensiert. Zur Verringerung der Winkelgeschwindigkeit von der zweiten Winkelgeschwindigkeit auf die dritte Winkelgeschwindigkeit wird die Person nach innen schauend ausgerichtet. Die dritte Gleichgewichtsachse der Person weist somit nach innen, gegen die Radialkomponente der Hauptbeschleunigung. Die Ausrichtung der Person muss dabei nicht exakt radial erfolgen, sondern kann auch in einem Winkel zwischen der tangentialen und der radialen Richtung festgehalten oder aktiv geregelt bewegt sein.

Gemäß einer weiteren Ausführungsform des erfindungsgemäßen Verfahrens wird die Person von einer zweiten Winkelgeschwindigkeit auf eine dritte Winkelgeschwindigkeit verzögert. Die dritte Winkelgeschwindigkeit ist wiederum kleiner als die zweite Winkelgeschwindigkeit. Dabei wird die Person, insbesondere die dritte Gleichgewichtsachse der Person, im Wesentlichen radial nach innen positioniert. Die Achse ist dabei aus der Hauptdrehebene 26 nach unten geneigt, sodass beispielsweise die Hauptbeschleunigung in Richtung der ersten Gleichgewichtsachse 13 der Person 1 verläuft. Es wird erwartet, dass die Gleichgewichtsorgane der Person Bogengänge umfassen und dass zur Reduktion der primären Fehlkräfte und/oder der sekundären Fehlkräfte eines Bogenganges die primären Fehlkräfte und/oder die sekundären Fehlkräfte eines weiteren Bogenganges erhöht werden und dass die sekundären Fehlkräfte unterhalb oder im Bereich der Reizschwelle der Person liegen.
Die erfindungsgemäße Vorrichtung zur Durchführung des Verfahrens ist beispielsweise dadurch gekennzeichnet, dass die Nebenachsen durch ein Zentrum verlaufen, das sich im Bereich des Kopfes 2 der Person 1 befindet. Die Person wird dabei derart in der Kabine platziert, dass sich der Kopf im Bereich des Zentrums befindet.
Gemäß einer Ausführungsform schneiden die drei Achsen einander im Bereich des Zentrums.
Gemäß einer weiteren Ausführungsform weist zumindest eine der Nebenachsen einen Normalabstand zu den weiteren Nebenachsen auf. Dieser Abstand kann beispielsweise dem Abstand zwischen einem Gleichgewichtsorgan und dem Auge der Person betragen.
Gemäß einer weiteren Ausführung des Verfahrens, ist vorgesehen, dass zur Simulation einer wechselnden Beschleunigung entlang einer Körperachse der Person, die Person
- mit einer konstanten ersten Winkelgeschwindigkeit um die Hauptachse gedreht wird bei welcher die Richtung der ersten Hauptbeschleunigung einen ersten Winkel zur Richtung der Erdbeschleunigung aufweist,
- anschließend die Person auf eine zweite Winkelgeschwindigkeit beschleunigt oder verzögert wird, bei der die Richtung der zweiten Hauptbeschleunigung einen zweiten Winkel zur Richtung der Erdbeschleunigung aufweist,
- dass dabei die dritte Gleichgewichtsachse der Person in eine, von der Tangentialebene abweichenden Richtung gedreht wird oder ist
- und dass die Körperachse der Person in eine Zwischenstellung zwischen der Richtung der ersten Hauptbeschleunigung und der Richtung der zweiten Hauptbeschleunigung und/oder in den Bereich der ersten Hauptbeschleunigung oder in den Bereich der zweiten Hauptbeschleunigung gedreht wird,
und/oder dass der Winkel zwischen der Körperachse und der Erdbeschleunigung zwischen dem ersten Winkel und zweiten dem Winkel liegt.
Gemäß einer weiteren Ausführung des Verfahrens, ist vorgesehen, dass die dritte Gleichgewichtsachse der Person bei konstanter und/oder wechselnder Winkelgeschwindigkeit des Hauptantriebes im Wesentlichen in einer Ebene zwischen der Tangentialebene und der Radialebene liegt, wobei die Schnittgerade der Tangentialeben mit der Radialebene in der Ebene liegt.

Zum Antrieb der Drehung um die Hauptachse 3 und zum Antrieb der Drehung der Person 1 um die erste Nebenachse 19, die zweite Nebenachse 20 und/oder die dritte Nebenachse 21 sind Antriebe vorgesehen. Diese Antriebe sind gesteuert und/oder aktiv geregelt. Somit kann die Bewegung der Person 1 gesteuert und/oder aktiv geregelt sein. Die Regelung kann dabei dadurch gekennzeichnet sein, dass Steuersignale zur Steuerung der Antriebe geleitet sind, wobei die Antriebe zur Drehung der Person gesteuert und/oder geregelt sind und/oder wobei die Bewegung der Person unterhalb der Reizschwelle der Person liegt.
Gemäß einer Ausführung des erfindungsgemäßen Verfahrens wird eine Person von einer ersten Winkelgeschwindigkeit auf eine zweite Winkelgeschwindigkeit gebracht, wobei bei der ersten Winkelgeschwindigkeit eine erste Hauptbeschleunigung von etwa 3G wirkt und bei der zweiten Winkelgeschwindigkeit eine zweiten Hauptbeschleunigung von etwa 1,4G wirkt. Die Person 1 wird dabei positioniert, sodass die dritte Gleichgewichtsachse nach außen weist und von der Hauptdrehebene etwa 60° nach oben weist. Bei Verringerung der Winkelgeschwindigkeit von der ersten Winkelgeschwindigkeit auf zweite Winkelgeschwindigkeit wird dabei die Person zur Kompensation der Tangentialkraft um Nebenachsen gedreht. Um den Drallfehler zu verringern wird eine Drehung der Person um die zweite Gleichgewichtsachse festgehalten oder blockiert. Die Kompensation der Tangentialbeschleunigung geschieht dabei beispielsweise durch Drehung der Person um eine Körperachse, die Parallel zur Hauptachse verläuft.
Die Erfindung betrifft auch eine Vorrichtung zur Simulation von Beschleunigungen für eine Person,
auf die eine Hauptbeschleunigung wirkt, die im Wesentlichen durch Drehung der Person mit einem Abstand um eine Hauptachse und durch die Erdbeschleunigung erzeugt ist, wobei der Wert und die Richtung der Hauptbeschleunigung zumindest durch die Erdbeschleunigung, die Tangentialbeschleunigung und die Radialbeschleunigung bestimmt ist, wobei die Lage der Person zur Richtung der Hauptbeschleunigung im Wesentlichen durch eine Drehung der Person um zumindest zwei Nebenachsen bestimmt ist, wobei die Nebenachsen durch ein Zentrum verlaufen, das im Bereich der Person liegt, wobei bei Änderung des Wertes und der Richtung der Hauptbeschleunigung auf die Person primäre Fehlkräfte wirken die durch Drehung der Person um die Nebenachsen zumindest teilweise kompensiert sind, wobei durch Drehung der Person um die Nebenachsen sekundäre Fehlkräfte auf die Person wirken und wobei durch Drehung und Positionierung der Person um drei Nebenachsen die sekundären Fehlkräfte reduziert sind. Grundsätzlich kann durch Rotation der Person 1 um die drei Nebenachsen die Richtung der auf die Person wirkenden Hauptbeschleunigung 5 entlang einer beliebigen Körperachse frei gewählt werden. In den vorangegangenen Beispielen wurden als Körperachsen beispielsweise die erste Gleichgewichtsachse 13 oder die Gierachse gewählt. Bei Simulationen von Objekten, in denen die Person beispielsweise liegend positioniert ist, kann auch eine schräg durch den Körper der Person verlaufende Körperachse als gewünschte Richtung der Hauptbeschleunigung gewählt werden. Die grundsätzliche kinematische Anordnung und das Verfahren zur Kompensation der sekundären Fehlkräfte bleiben jedoch unverändert, lediglich die Lage der Person ist verändert.
An dieser Steile sei angemerkt, dass sich die Erfindung nicht auf die angeführten Ausführungsbeispiele beschränkt. Weitere, dem Erfindungsgedanken entsprechende Ausführungen ergeben sich auch aus Kombinationen einzelner oder mehrerer Merkmale, die aus den Ansprüchen zu entnehmen sind. Somit sind auch Ausführungen offenbart, die aus Kombinationen von Merkmalen bestehen, die aus unterschiedlichen Ausführungsbeispielen stammen. Die Figuren sind zumindest teilweise schematische Darstellungen, wobei die Dimensionen und Proportionen von weiteren, zeichnerisch nicht dargestellten, Ausführungsformen oder Merkmalen sowie von realen Ausführungen abweichen können.
1. Person
2. Kopf
3. Hauptachse
4. Abstand von der Hauptdrehachse
5. Hauptbeschleunigung
6. Drehwinkel
7. Erdbeschleunigung
8. Radialbeschleunigung
9. Tangentialbeschleunigung
10. erste Gleichgewichtsebene - Gierebene
11. zweite Gleichgewichtsebene- Nickebene
12.dritte Gleichgewichtsebene - Rollebene
13.erste Gleichgewichtsachse oder Gierachse
14. zweiten Gleichgewichtsachse oder der Nickachse
15.dritte Gleichgewichtsachse Rollachse.
16. erstes Trägerelement
17.zweites Trägerelement
18.drittes Trägerelement
19. Erste Nebenachse
20.Zweite Nebenachse
21.Dritte Nebenachse
22. Zentrum
23. Bewegungsvorrichtung
24. Kabine
25. Steuerungseinheit
26. Hauptdrehebene
27. Erster Winkel
28.Zweiter Winkel
29. Lagewinkel der dritten Gleichgewichtsachse
30. Lagewinkel der ersten Gleichgewichtsachse
31. Tangentialwinkel
32. Fundament
33. Hauptantrieb
34. Hauptarm
35. Bildwiedergabefläche
36. Schlittenkorb
37. Heave-Schlitten
38. Erste Hauptbeschleunigung
39. Zweiter Hauptbeschleunigung
40. Beschleunigungsvektor
41. Zwischenstellung

## Patentansprüche

1. Verfahren zur Simulation von Beschleunigungen für eine Person,
auf die eine Hauptbeschleunigung wirkt, die im Wesentlichen durch Drehung der Person mit einem Abstand um eine Hauptachse und durch die Erdbeschleunigung erzeugt wird,
- wobei der Wert und die Richtung der Hauptbeschleunigung zumindest durch die Erdbeschleunigung, die Tangentialbeschleunigung und die Radialbeschleunigung bestimmt wird,
- wobei die Lage der Person zur Richtung der Hauptbeschleunigung im Wesentlichen durch Drehung und/oder Positionierung der Person um zumindest zwei Nebenachsen bestimmt wird,
- wobei die Nebenachsen durch ein Zentrum verlaufen, das im Bereich der Person liegt,
- wobei bei Änderung des Wertes und der Richtung der Hauptbeschleunigung auf die Person primäre Fehlkräfte wirken die durch Drehung der Person um die Nebenachsen zumindest teilweise kompensiert werden
- und wobei durch Drehung der Person um die Nebenachsen sekundäre Fehlkräfte auf die Person wirken
- wobei die Drehungen durch Antriebe der Hauptachse und der wenigstens zwei Nebenachsen ausgeführt werden
- und wobei die Antriebe gesteuert und/oder aktiv geregelt werden,
**dadurch gekennzeichnet, dass**
durch Drehung und Positionierung der Person um drei Nebenachsen die sekundären Fehlkräfte reduziert werden,
**dass** die durch primäre Fehlkräfte hervorgerufenen Winkelbeschleunigungen und die durch sekundäre Fehlkräfte hervorgerufenen Winkelbeschleunigungen unterhalb oder im Bereich der Reizschwelle der Person liegen,
**dass** zumindest eine Steuerungseinheit zur Steuerung und/oder aktiven Regelung von Antrieben zur Bewegung der Trägerelemente (16, 17,18) und einer Bewegungsvorrichtung (23) vorgesehen ist,
**und dass** die Bewegung der Antriebe der Trägerelemente (16, 17,18) um die Nebenachsen (19, 20, 21) durch die Steuerungseinheit derart gesteuert und/oder aktiv geregelt sind, dass die Bewegung unterhalb oder im Bereich der Reizschwelle der Person liegen.

2. Verfahren Anspruch 1, **dadurch gekennzeichnet, dass** zur Reduktion der sekundären Fehlkräfte die primären Fehlkräfte erhöht werden.

3. Verfahren nach Anspruch 1 oder 2, **dadurch gekennzeichnet, dass** zur Reduktion der primären Fehlkräfte und/oder der sekundären Fehlkräfte in einer Gleichgewichtsebene die primären Fehlkräfte und/oder die sekundären Fehlkräfte in einer weiteren Gleichgewichtsebene erhöht werden.

4. Verfahren nach einem der Ansprüche 1 bis 3, **dadurch gekennzeichnet, dass** die primären Fehlkräfte Hauptbeschleunigungsfehlkräfte und/oder Coriolisfehlkräfte und die sekundären Fehlkräfte Drallfehler und/oder Dreh-Trägheitskräfte umfassen.

5. Verfahren nach einem der Ansprüche 1 bis 4, **dadurch gekennzeichnet, dass** zur Reduktion der Dreh-Trägheitskräfte die Winkelbeschleunigung und/oder der Gradient der Winkelbeschleunigung einer Drehung der Person um die Nebenachsen begrenzt und/oder gedämpft wird.

6. Verfahren nach einem der Ansprüche 1 bis 5, **dadurch gekennzeichnet, dass** die Person um die Hauptachse und um die Nebenachsen gedreht wird, sodass dabei die Winkelbeschleunigung jedes Bogenganges in der jeweiligen Gleichgewichtsebene unterhalb der Reizschwelle der Person liegt.

7. Verfahren nach einem der Ansprüche 1 bis 6, **dadurch gekennzeichnet, dass** die Reizschwelle zwischen 0,8°/s² und 5°/s², bevorzugt zwischen 1°/s² und 3°/s² beträgt.

8. Verfahren nach einem der Ansprüche 1 bis 7, **dadurch gekennzeichnet, dass** zur Simulation einer wechselnden Beschleunigung entlang einer Körperachse der Person, die Person
- mit einer konstanten ersten Winkelgeschwindigkeit um die Hauptachse gedreht wird bei welcher die Richtung der ersten Hauptbeschleunigung einen ersten Winkel zur Richtung der Erdbeschleunigung aufweist,
- anschließend die Person auf eine zweite Winkelgeschwindigkeit beschleunigt oder verzögert wird, bei der die Richtung der zweiten Hauptbeschleunigung einen zweiten Winkel zur Richtung der Erdbeschleunigung aufweist,
- und dass dabei die dritte Gleichgewichtsachse der Person in eine von der Tangentialebene abweichenden Richtung gedreht wird.

9. Verfahren nach einem der Ansprüche 1 bis 8, **dadurch gekennzeichnet, dass** zur Simulation einer wechselnden Beschleunigung entlang einer Körperachse der Person, die Person
- mit einer konstanten ersten Winkelgeschwindigkeit um die Hauptachse gedreht wird bei welcher die Richtung der ersten Hauptbeschleunigung einen ersten Winkel zur Richtung der Erdbeschleunigung aufweist,
- anschließend die Person auf eine zweite Winkelgeschwindigkeit beschleunigt oder verzögert wird, bei der die Richtung der zweiten Hauptbeschleunigung einen zweiten Winkel zur Richtung der Erdbeschleunigung aufweist,
- dass dabei die dritte Gleichgewichtsachse der Person in eine, von der Tangentialebene abweichenden Richtung gedreht wird oder ist
- und dass die Körperachse der Person in eine Zwischenstellung zwischen der Richtung der ersten Hauptbeschleunigung und der Richtung der zweiten Hauptbeschleunigung und/oder in den Bereich der ersten Hauptbeschleunigung oder in den Bereich der zweiten Hauptbeschleunigung gedreht wird

10. Verfahren nach einem der Ansprüche 8 oder 9, **dadurch gekennzeichnet, dass** die Lage der dritten Gleichgewichtsachse und/oder der Körperachse der Person zwischen der Tangentialebene und der Radialebene durch Drehung der Person um drei Nebenachsen gesteuert oder aktiv geregelt wird wobei insbesondere die Drehung der Körperachsen und der Gleichgewichtsachsen durch Lageänderung der Person um die Nebenachsen verändert oder positioniert wird.

11. Vorrichtung zur Simulation von Beschleunigungen für eine Person umfassend:
- ein erstes Trägerelement(16), das eine Haltevorrichtung für zumindest eine Person(1) aufweist und um eine erste Nebenachse(19) drehbar gegenüber einem zweiten Trägerelement(17) angeordnet ist;
- ein zweites Trägerelement(17), das um eine zweite Nebenachse(20) drehbar gegenüber einem dritten Trägerelement(18) angeordnet ist, wobei die erste Nebenachse(19) und die zweite Nebenachse (20) im Wesentlichen orthogonal zueinander angeordnet sind;
**dadurch gekennzeichnet, dass**
zur Kompensation oder Verringerung von sekundären Fehlkräften das zweite Trägerelement (17) drehbar um eine dritte Nebenachse (21) an einer Bewegungsvorrichtung (23) angeordnet ist,
**dass** zumindest eine Steuerungseinheit zur Steuerung und/oder aktiven Regelung von Antrieben zur Bewegung der Trägerelemente (16, 17,18) und einer Bewegungsvorrichtung (23) vorgesehen ist,
**und dass** die Bewegung der Antriebe der Trägerelemente (16, 17,18) um die Nebenachsen (19, 20, 21) durch die Steuerungseinheit derart gesteuert und/oder aktiv geregelt sind, dass die Bewegung unterhalb oder im Bereich der Reizschwelle der Person liegen.

12. Vorrichtung nach Anspruch 11, **dadurch gekennzeichnet, dass** die zweite Nebenachse (20) und die dritte Nebenachse (21) im Wesentlichen orthogonal zueinander angeordnet sind.

13. Vorrichtung nach einem der Ansprüche 11 bis 12, **dadurch gekennzeichnet, dass** durch die Steuerungseinheit eine Bewegung der Antriebe der Nebenachsen derart gesteuert ist, dass die Winkelbeschleunigungen der Bewegung unterhalb der Reizschwelle der Person liegen.

14. Vorrichtung nach einem der Ansprüche 11 bis 13, **dadurch gekennzeichnet, dass** die Vorrichtung zur Ausführung des Verfahrens nach einem der Ansprüche 1 bis 11 eingerichtet ist.

15. Vorrichtung nach einem der Ansprüche 11 bis 14, **dadurch gekennzeichnet, dass** die Bewegungsvorrichtung(23) als Einarmzentrifuge, als Zentrifuge mit verfahrbarem Schlitten, als Zentrifuge mit verfahrbarem Heave-Schlitten, als Zweiarm-Zentrifuge mit beidseitig verfahrbarem Schlitten, als Zweiarm-Zentrifuge mit beidseitig verfahrbarem Heave-Schlitten, oder als Roboterarm mit zumindest einem rotatorischen und/oder translatorischen Freiheitsgrad ausgeführt ist.

## Claims

1. A method of simulating accelerations for a person on whom a principal acceleration acts which is essentially generated by the rotation of the person at a distance about a main axis and through gravitational acceleration,
- wherein the value and the direction of the principal acceleration are at least determined by the gravitational acceleration, tangential acceleration and radial acceleration
- wherein the position of the person in relation to the direction of the principal acceleration is essentially determined by rotating and/or positioning the person about at least two secondary axes,
- wherein the secondary axes run through a centre which lies is the area of the person,
- wherein in the event of a change in the value and the direction of the principal acceleration, primary faulty forces act on the person which are at least partially compensated by rotating the person about the secondary axes,
- and wherein through rotating the person about the secondary axes secondary faulty forces act on the person
- wherein the rotations are carried out by drives of the main axis and the at least two secondary axes
- and wherein the drives are controlled and/or actively regulated,
**characterised in that**
through rotating and positioning the person about three secondary axes the secondary faulty forces are reduced,
**in that** the angular accelerations caused by primary faulty forces and the angular accelerations caused by secondary faulty forces are below or in the region of the stimulation threshold of the person,
**in that** at least one control unit to control and/or actively regulate drives to move the supporting elements (16, 17, 18) and a moving device (23) is provided,
and **in that** the movement of the drives of the supporting elements (16, 17, 18) about the secondary axes (19, 20, 21) is controlled and/or actively regulated by the control unit in such a way that the movement is below or in the region of the stimulation threshold of the person.

2. The method according to claim 1, **characterised in that** in order to reduce the secondary faulty forces the primary faulty forces are increased.

3. The method according to claim 1 or 2, **characterised in that** in order to reduce the primary faulty forces and/or the secondary faulty forces in one equilibrium plane the primary faulty forces and/or the secondary faulty forces are increased in another equilibrium plane.

4. The method according to any one of claims 1 to 3, **characterised in that** the primary faulty forces comprise principal acceleration faulty force and/or Coriolis faulty forces and the secondary faulty forces comprise spin errors and/or torque-inertia forces.

5. The method according to any one of claims 1 to 4, **characterised in that** in order to reduce the torque-inertia forces the angular acceleration and/or the gradient of the angular acceleration of a rotation of the person about the secondary axes is restricted and/or damped.

6. The method according to any one of claims 1 to 5, **characterised in that** person is rotated about the main axis and about the secondary axes so that the angular acceleration of every turn in the respective equilibrium plane is below the stimulation threshold of the person.

7. The method according to any one of claims 1 to 6, **characterised in that** the stimulation threshold is between 0.8°/s² and 5°/s², preferably between 1°/s² and 3°/s².

8. The method according to any one of claims 1 to 7, **characterised in that** to simulate a changing acceleration along a body axis of the person, the person
- is rotated at a constant first angular speed about the main axis whereby the direction of the first principal acceleration has a first angle in relation to direction of the gravitational acceleration,
- the person is then accelerated or slowed to a second angular speed, whereby the direction of the second principal acceleration has a second angle in relation to the direction of the gravitational acceleration
- **in that** the third equilibrium axis of the person is rotated in a direction differing from the tangential plane.

9. The method according to any one of claims 1 to 8, **characterised in that** to stimulate a changing acceleration along a body axis of a person, the person
- is rotated at a constant first angular speed about the main axis whereby the direction of the first principal acceleration has a first angle in relation to direction of the gravitational acceleration,
- the person is then accelerated or slowed to a second angular speed, whereby the direction of the second principal acceleration has a second angle in relation to the direction of the gravitational acceleration
- **in that** the third equilibrium axis of the person is rotated or is in a direction differing from the tangential plane
- and **in that** the body axis of the person is rotated into an intermediate positon between the direction of the first principal acceleration and the direction of the second principal acceleration and/or into the area of the first principal acceleration or into the area of the second principal acceleration.

10. The method according to any one of claims 8 or 9, **characterised in that** the position of the third equilibrium axis and/or the body axis of the person between the tangential plane and the radial plane is controlled or actively regulated by rotating the person about three secondary axes, wherein, in particular, the rotation of the body axes and the equilibrium axes is changed or positioned through changing the position of the person about the secondary axes.

11. A device for simulating accelerations for a person comprising:
- a first supporting element (16) that has a holder device for at least one person (1) and is arranged to rotate about a first secondary axis (19) respective to a second supporting element (17);
- a second supporting element (17) which is arranged to rotate about a second secondary axis (20) respective to a third supporting element (18), wherein the first secondary axis (19) and the second secondary axis (20) are arranged essentially orthogonally to each other;
**characterised in that**
to compensate for or reduce secondary faulty forces, the second supporting element (17) is arranged rotabably about a third secondary axis (21) on a moving device (23),
**in that** at least one control unit for controlling and/or actively regulating drives to move the supporting elements (16, 17, 18) and a moving device (23) is provided,
and **in that** the movement of the drives of the supporting elements (16, 17, 18) about the secondary axes (19, 20, 21) is controlled and/or actively regulated in such a way that the movement is below or in the range of the simulation threshold of the person.

12. The device according to claim 11, **characterised in that** the second secondary axis (20) and the third secondary axis (21) are essentially orthogonal to each other.

13. The device according to any one of claims 11 to 12, **characterised in that** through the control unit a movement of the drives of the secondary axes is controlled in such a way that the angular accelerations of the movement are below the stimulation threshold of the person.

14. The device according to any one of claims 11 to 13, **characterised in that** the device is adapted to execute the method according to any one of claims 1 to 11.

15. The device according to any one of claims 11 to 14, **characterised in that** the movement device (23) is designed as a single-arm centrifuge, a centrifuge with a displaceable carriage, a centrifuge with a displaceable heave carriage, a two-arm centrifuge with a carriage displaceable on both sides, a two-arm centrifuge with a heave carriage displaceable on both sides or as a robotic arm with at least one rotational and/or translational degree of freedom.

## Revendications

1. Procédé, destiné à la simulation d'accélérations pour une personne,
sur laquelle agit une accélération principale, qui est générée sensiblement par rotation de la personne avec un écart par rapport à un axe principal et par la gravitation,
- la valeur et la direction de l'accélération principale étant déterminées au moins par la gravitation, par l'accélération tangentielle et par l'accélération radiale,
- la position de la personne en direction de l'accélération principale étant sensiblement déterminée par rotation et/ou positionnement de la personne autour d'au moins deux axes secondaires,
- les axes secondaires s'écoulant à travers un centre, qui se situe dans la zone de la personne,
- lors d'une modification de la valeur et de la direction de l'accélération principale sur la personne, des forces erronées primaires agissant sur la personne qui sont compensées au moins partiellement par rotation de la personne autour des axes secondaires
- et par rotation de la personne autour des axes secondaires, des forces erronées secondaires agissant sur la personne
- les rotations étant réalisées par des entraînements de l'axe principal et des au moins deux axes secondaires
- et les entraînements étant réglés de manière commandée et/ou active,
**caractérisé en ce que**
par rotation et positionnement de la personne autour de trois axes secondaires, les forces erronées secondaires se réduisent,
**en ce que** les accélérations angulaires provoquées par les forces erronées primaires et les accélérations angulaires provoquées par les forces erronées secondaires sont inférieures ou de l'ordre du seuil de sensibilité de la personne,
**en ce qu'**au moins une unité de commande est prévue pour la commande et/ou pour le réglage actif d'entraînements pour le déplacement des éléments porteurs (16, 17,18) et d'un dispositif de déplacement (23),
et **en ce que** le déplacement des entraînements des éléments porteurs (16, 17,18) autour des axes secondaires (19, 20, 21) est commandé et/ou réglé activement par l'unité de commande, de telle sorte que le déplacement soit inférieur ou de l'ordre du seuil de sensibilité de la personne.

2. Procédé selon la revendication 1, **caractérisé en ce que** pour réduire les forces erronées secondaires, on réduit les forces erronées primaires.

3. Procédé selon la revendication 1 ou 2, **caractérisé en ce que** pour réduire les forces erronées primaires et/ou les forces erronées secondaires dans un niveau d'équilibre, on augmente les forces erronées primaires et/ou les forces erronées secondaires dans un niveau d'équilibre supplémentaire.

4. Procédé selon l'une quelconque des revendications 1 à 3, **caractérisé en ce que** les forces erronées primaires sont des forces erronées d'accélération principale et/ou des forces erronées de Coriolis et les forces erronées secondaires sont des erreurs rotatoires et/ou des forces d'inertie rotative.

5. Procédé selon l'une quelconque des revendications 1 à 4, **caractérisé en ce que** pour réduire les forces d'inertie rotatives, on limite et/ou on amortit l'accélération angulaire et/ou le gradient de l'accélération angulaire d'une rotation de la personne autour des axes secondaires.

6. Procédé selon l'une quelconque des revendications 1 à 5, **caractérisé en ce qu'**on fait tourner la personne autour de l'axe principal et autour des axes secondaires de sorte qu'à cet effet, l'accélération angulaire de chaque arcade dans le plan d'équilibre respectif soit inférieure au seuil de sensibilité de la personne.

7. Procédé selon l'une quelconque des revendications 1 à 6, **caractérisé en ce que** le seuil de sensibilité se situe entre 0,8°/s² et 5°/s², de préférence entre 1°/s² et 3°/s².

8. Procédé selon l'une quelconque des revendications 1 à 7, **caractérisé en ce que** pour simuler une accélération variable le long d'un axe corporel de la personne,
- on fait tourner la personne autour de l'axe principal à une première vitesse angulaire constante à laquelle la direction de la première accélération principale présente un premier angle par rapport à la direction de la gravitation,
- on accélère ou on ralentit ensuite la personne à une deuxième vitesse angulaire à laquelle la direction de la deuxième accélération principale présente un deuxième angle par rapport à la direction de la gravitation,
- et **en ce qu'**à cet effet, on fait tourner le troisième axe d'équilibre de la personne dans une direction différente du plan tangentiel.

9. Procédé selon l'une quelconque des revendications 1 à 8, **caractérisé en ce que** pour simuler une accélération variable le long d'un axe corporel de la personne,
- on fait tourner la personne autour de l'axe principal à une première vitesse angulaire constante à laquelle la direction de la première accélération principale présente un premier angle par rapport à la direction de la gravitation,
- on accélère ou on ralentit ensuite la personne à une deuxième vitesse angulaire à laquelle la direction de la deuxième accélération principale présente un deuxième angle par rapport à la direction de la gravitation,
- et **en ce qu'**à cet effet, on fait tourner le troisième axe d'équilibre de la personne, ou il est tourné dans une direction différente du plan tangentiel,
- et **en ce qu'**on fait tourner l'axe corporel de la personne dans une position intermédiaire entre la direction de la première accélération principale et la direction de la deuxième accélération principale et/ou dans l'ordre de la première accélération principale ou dans l'ordre de la deuxième accélération principale

10. Procédé selon l'une quelconque des revendications 8 ou 9, **caractérisé en ce qu'**on commande ou on règle activement la position du troisième axe d'équilibre et/ou de l'axe corporel de la personne entre le plan tangentiel et le plan radial par rotation de la personne autour de trois axes secondaires, notamment la rotation des axes corporels et des axes d'équilibre étant modifiée ou positionnée par changement de position de la personne autour des axes secondaires.

11. Dispositif, destiné à la simulation d'accélérations pour une personne, comprenant :
- un premier élément porteur (16), qui comporte un dispositif de maintien pour au moins une personne (1) et qui est placé en étant rotatif autour d'un premier axe secondaire (19) par rapport à un deuxième élément porteur (17) ;
- un deuxième élément porteur (17), qui est placé en étant rotatif autour d'un deuxième axe secondaire (20) par rapport à un troisième élément porteur (18), le premier axe secondaire (19) et le deuxième axe secondaire (20) étant placés de manière sensiblement orthogonale l'un par rapport à l'autre ;
**caractérisé en ce que**
pour compenser ou pour réduire des forces erronées secondaires, le deuxième élément porteur (17) est placé sur un dispositif de déplacement (23) en étant rotatif autour d'un troisième axe secondaire (21) ,
**en ce qu'**il est prévu au moins une unité de commande pour commander et/ou pour régler activement des entraînements pour le déplacement des éléments porteurs (16, 17,18) et d'un dispositif de déplacement (23),
et **en ce que** le déplacement des entraînements des éléments porteurs (16, 17,18) autour des axes secondaires (19, 20, 21) est commandé et/ou réglé activement par l'unité de commande, de telle sorte que le déplacement soit inférieur ou de l'ordre du seuil de sensibilité de la personne.

12. Dispositif selon la revendication 11, **caractérisé en ce que** le deuxième axe secondaire (20) et le troisième axe secondaire (21) sont placés de manière sensiblement orthogonale l'un par rapport à l'autre.

13. Dispositif selon l'une quelconque des revendications 11 à 12, **caractérisé en ce que** par l'unité de commande, un déplacement des entraînements des axes secondaires est commandé de telle sorte que les accélérations angulaires du déplacement soient inférieures au seuil de sensibilité de la personne.

14. Dispositif selon l'une quelconque des revendications 11 à 13, **caractérisé en ce que** le dispositif est aménagé pour réaliser le procédé selon l'une quelconque des revendications 1 à 11.

15. Dispositif selon l'une quelconque des revendications 11 à 14, **caractérisé en ce que** le dispositif de déplacement (23) est réalisé sous la forme d'une centrifugeuse à un bras, d'une centrifugeuse à chariot déplaçable, d'une centrifugeuse à chariot heave déplaçable, d'une centrifugeuse à deux bras, avec chariot heave déplaçable de part et d'autre ou d'un bras de robot avec au moins un degré de liberté en rotation et/ou en translation.
